# EUROPÄISCHE PATENTANMELDUNG

(11) **EP 1 574 372 A2**
(43) Veröffentlichungstag der Anmeldung: **14.09.2005**
(21) Anmeldenummer: 05001283.0
(22) Anmeldetag: 22.01.2005
(51) Int. Cl.: B60J 3/04

(54) **Sichtscheibe für ein Fahrzeug**

(30) Priorität: 09.03.2004 DE 102004011298; 19.06.2004 DE 102004029799
(71) Anmelder: Hirschmann Electronics GmbH, 72654 Neckartenzlingen (DE)
(72) Erfinder: Gelman, Alexander, 70736 Fellbach (DE)
(74) Vertreter: Thul, Hermann

(57) **Zusammenfassung**

Sichtscheibe (1) für ein Fahrzeug, dadurch gekennzeichnet, daß flächig gestaltete Mittel an und/oder in der Sichtscheibe (1) vorhanden sind, mit Hilfe derer die Durchlässigkeit der Sichtscheibe (1) für die elektromagnetischen Wellen im Infrarotbereich und/oder im sichtbaren Bereich variabel steuerbar ist.

## Beschreibung

Die Erfindung betrifft eine Sichtscheibe, wie z.B. eine Windschutzscheibe, Seitenscheibe oder eine Heckscheibe für ein Fahrzeug gemäß den Merkmalen des Oberbegriffes des Patentanspruches 1.

Bei Fahrzeugen ist es bekannt, zur Reduzierung der Wärmedurchlässigkeit eine transparente oder getönte Wärmeschutzverglasung zu verwenden, die als Metallbeschichtung der Scheiben ausgeführt wird. Dabei ist die durch die Metallbeschichtung vorgegebene anteilige Reflexion von Infrarotwellen konstant. Die elektromagnetischen Wellen im sichtbaren Längenbereich werden ebenfalls geringfügig reflektiert. Die getönte Wärmeschutzverglasung bietet nur geringfügigen Schutz vor einer Aufwärmung des Innenraumes des Fahrzeuges, da sich die oftmals dunkel gestalteten Teile im verglasten Innenraum des Fahrzeuges, wie z.B. Sitze, Armaturenbrett und dergleichen die Strahlungsenergie der Sonne absorbieren und sich dadurch in nachteiliger Weise erwärmen. Denn es hat sich gezeigt, dass das Wohlbefinden und die Konzentration gerade des Fahrers eines Fahrzeuges stark beeinträchtigt ist, wenn der Innenraum des Fahrzeuges zu hohe Temperaturen aufweist.

Daneben sind im bautechnischen Bereich Sichtscheiben mit einer steuerbaren Transparenz bekannt, die allerdings keinen Schutz vor Sonneneinstrahlung sowohl im Infrarot- als auch im sichtbaren Bereich bieten. Ein Nachteil solcher Ausführung besteht somit darin, dass die Sichtscheibe nur einen einfachen Sichtschutz bietet.

Darüber hinaus werden zum Schutz vor starker Sonneneinstrahlung zusätzlich Lichtschutzelemente wie Jalousien, Rollläden, Rollos und dergleichen verwendet, die das Eindringen von Sonnenstrahlen in den Fahrzeuginnenraum verhindern sollen. Solche zusätzlichen Lichtschutzelemente haben aber zwei gravierende Nachteile. Zum einen ist der Einbau und die Wartung solcher Lichtschutzelemente mit zusätzlichen Kosten verbunden, die Bedienung umständlich und die Montage von innen nur erschwert (wie bei der Heckscheibe) oder gar nicht möglich (wie beispielsweise bei der Windschutzscheibe, bei der jederzeit freie Sicht möglich sein muss bzw. bei Seitenscheiben, die versenkbar sind).

Ein weiterer Nachteil dieser im Fahrzeuginnenraum angebrachten Lichtschutzelemente liegt darin, dass die Sonneneinstrahlung zunächst durch die Glasscheibe durchdringen kann, ohne reflektiert zu werden, und sich der dahinter liegende Bereich, insbesondere der Raum zwischen der Glasscheibe und dem Lichtschutzelement, sich stark aufwärmen kann, wobei es auch wieder zu einer unerwünschten Aufwärmung des Fahrzeuginnenraumes kommt. Wirksam wäre hier eine Anbringung von Lichtschutzelementen von außerhalb des Fahrzeuges, was sich jedoch aus Sicherheitsgründen und auch aus aerodynamischen Gründen verbietet.

Der Erfindung liegt daher die Aufgabe zu Grunde, eine Sichtscheibe für ein Fahrzeug bereitzustellen, mit der die Aufheizung des Fahrzeuginnenraumes wirksam verhindert, gleichzeitig aber der Betrieb des Fahrzeuges nicht behindert wird.

Diese Aufgabe ist durch die Merkmale des Patentanspruches 1 gelöst.

Erfindungsgemäß sind flächig gestaltete Mittel an und/oder in der Sichtscheibe vorhanden, mit Hilfe derer die Durchlässigkeit der Sichtscheibe für die elektromagnetischen Wellen im Infrarotbereich und/oder im sichtbaren Bereich variabel steuerbar ist. Ganz besonders wichtig ist die Steuerbarkeit der flächig gestalten Mittel in der Art und Weise, dass die elektromagnetischen Wellen im Infrarotbereich wirksam reflektiert werden. Dadurch wird vermieden, dass die Infrarotstrahlen in den Fahrzeuginnenraum eindringen und dort auf absorbierende Gegenstände treffen können, die sich erwärmen würden. Durch die erfindungsgemäßen flächig gestalteten und steuerbaren Mittel werden somit die Infrarotstrahlen wirksam absorbiert und eine Aufheizung des Fahrzeuginnenraumes vermieden. Somit bewirken die erfindungsgemäßen Mittel unter Einwirkung eines elektrischen Feldes oder auch in einem passiven Zustand eine Undurchlässigkeit für die elektromagnetischen Wellen im Infrarotbereich (zumindest in eine Richtung, insbesondere von außen in Richtung Innenraum des Fahrzeuges) und/oder im sichtbaren Bereich (ebenfalls zumindest in eine Richtung), wodurch sich ein Spiegeleffekt einstellt und die auf die Sichtscheibe treffenden elektromagnetischen Wellen im besten Fall vollständig oder zumindest ein große Anteil davon reflektiert (abgewiesen) wird. Durch die Änderungen der Eigenschaften des elektrischen Feldes (wie z.B. durch die Änderung der angelegten Spannung oder der eingeprägten Stromstärke) kann der Reflektionsgrad gesteuert werden. Dabei erfolgt die Steuerung des Reflektionsgrades beispielsweise derart, dass während der Fahrt des Fahrzeuges eine Mindestreflektion von elektromagnetischen Wellen im Infrarotbereich erfolgt, um einerseits eine Wärmeeinstrahlung zu reduzieren und andererseits eine freie Durchsicht für den Fahrer (und gegebenenfalls die Insassen) des Fahrzeuges zu gewährleisten. Ist das Fahrzeug abgestellt, werden die Mittel derart angesteuert, dass der Reflektionsgrad für die elektromagnetischen Wellen im Infrarotbereich und/oder im sichtbaren Bereich maximal ist, so dass einerseits die Aufwärmung des Innenraumes wirksam verhindert wird und andererseits eine Einblick in den Fahrzeuginnenraum verhindert wird, um Einbrüchen vorzubeugen.

In einer Ausgestaltung der Erfindung befinden sich die Mittel zwischen zumindest zwei Schichten der Scheibe oder alternativ bzw. ergänzend auf der äußeren und/oder der inneren Oberfläche der Sichtscheibe. In besonders bevorzugter Weise bietet es sich an, die Mittel zwischen zwei Schichten der Scheibe anzuordnen, da sie in diesem Zwischenbereich vor mechanischen Einwirkungen von außen geschützt sind. Dabei ist es denkbar, dass die Mittel in Form zumindest einer Schicht, zumindest einer Folie oder auch als dünner kristalliner Körper ausgeführt werden. Unter Lichteinwirkung (passiv) oder Elektrisierung (aktiv) werden die Mittel, insbesondere die Kristalle, polarisiert, infolge dessen die von außen kommenden elektromagnetischen Wellen reflektiert werden.

Des weiteren können für diesen Zweck auch die dünne Polarisationskörper, vorzugsweise Folien, verwendet werden. In diesem Fall werden die auftreffenden elektromagnetischen Wellen von einem solchen Körper polarisiert. Durch das Anlegen und entsprechende Steuerung eines elektromagnetischen Feldes an den zweiten Körper können die elektromagnetischen Wellen in den Innenraum gelangen oder werden abgeschottet.

Während es einerseits von Bedeutung ist, dass ein Eindringen von elektromagnetischen Wellen im Infrarotbereich von außen in den Fahrzeuginnenraum zu verhindern, kann es auch eine vorteilhafte Anwendung sein, dass Verlassen von Infrarotstrahlung aus dem Fahrzeuginnenraum nach außen zu verhindern, wenn niedrige Außentemperaturen herrschen.

Insgesamt bieten die erfindungsgemäße Mittel, die an zumindest einer, insbesondere allen Sichtscheiben des Fahrzeuges vorhanden sind, den Vorteil, dass während des Betriebes des Fahrzeuges (also während der Fahrt) ein gerade für den Fahrer optimaler Durchblick durch die Scheiben gegeben ist und andererseits schon die Wärmeeinstrahlung wirksam reflektiert wird. Steht das Fahrzeug still, kann dies erfasst werden und durch entsprechende Ansteuerung der Mittel der Reflektionsgrad erhöht werden, so dass weder eine Wärmestrahlung von außen in den Fahrzeuginnenraum eindringen, noch ein Einblick in den Fahrzeuginnenraum (im sichtbaren Bereich) gegeben ist.

Ausführungsbeispiele für die erfindungsgemäße Sichtscheibe für ein Fahrzeug, auf die die Erfindung jedoch nicht beschränkt ist, sind im folgenden beschrieben und anhand der Figuren erläutert.

Es zeigen:
- Figur 1:: Den beispielhaften Aufbau einer erfindungsgemäßen Sichtscheibe
- Figur 2:: Eine Segmentierung der erfindungsgemäßen Mittel auf der Sichtscheibe,
- Figur 3 und 4:: Verschiedene Möglichkeiten der Steuerung der erfindungsgemäßen Mittel

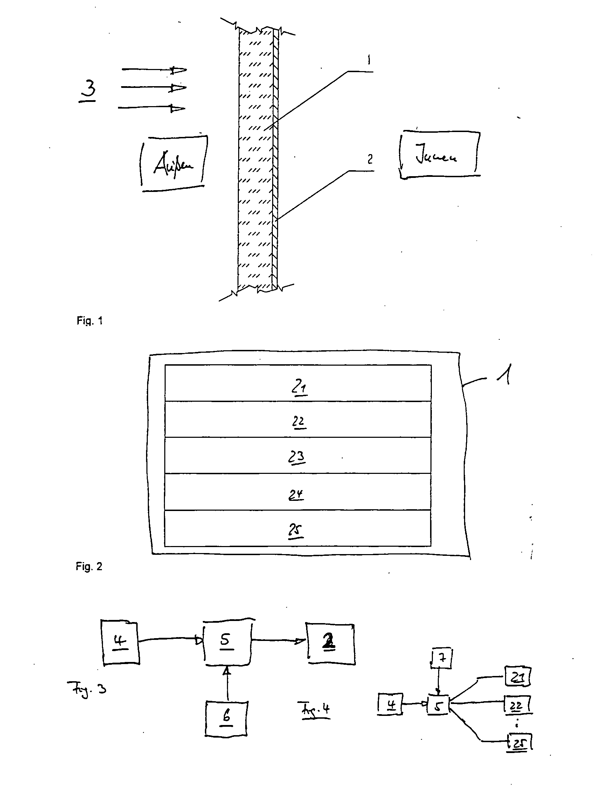

Figur 1 zeigt den beispielhaften Aufbau einer Sichtscheibe 1, bei der es sich um einen Scheibe wie z.B. eine Windschutzscheibe, Seitenscheibe, Heckscheibe oder Scheibe im Dachbereich oder dergleichen handeln kann. In dem beispielhaften Scheibenaufbau gemäß Figur 1 ist gezeigt, dass auf einer einfachen Glasscheibe 1 in Richtung des Innenbereiches des Fahrzeuges die erfindungsgemäßen Mittel 2 flächig aufgebracht sind, mit Hilfe derer die Durchlässigkeit der Sichtscheibe 1 für die elektromagnetischen Wellen im Infrarotbereich und/oder im sichtbaren Bereich von außen variabel steuerbar ist. So ist bei diesem Ausführungsbeispiel ein Durchdringen der Sichtscheibe 1 von Infrarotstrahlung 3 möglich, die allerdings an den flächig gestalteten Mitteln 2 zumindest teilweise, insbesondere vollständig reflektiert wird und somit nicht in den Innenraum des Fahrzeuges eindringen kann.

Figur 2 zeigt den Aufbau der Sichtscheibe 1, bei der die Mittel zur Verhinderung des Eindringens von elektromagnetischen Wellen im Infrarotbereich in mehrere Segmente 21-25 aufgeteilt sind. Dies hat den Vorteil, dass verschiedene Bereiche der Sichtscheibe 1 mit verschiedenen Reflektionsgraden ausgestattet werden können. Handelt es sich bei der Sichtscheibe 1 gemäß Figur 2 z.B. um die Windschutzscheibe eines Fahrzeuges, können diejenigen Segmente (z.B. 21, 25), die nicht im direkten Sichtbereich des Fahrers liegen, so angesteuert werden, dass der Reflektionsgrad höher ist als der Reflektionsgrad der anderen Segmente 22-24, die im direkten Sichtbereich des Fahrers liegen, um ihm den notwendigen Durchblick zu verleihen. In Figur 2 sind die zumindest zwei Segmente der Mittel streifenförmig und horizontal ausgebildet, wobei auch eine vertikale, diagonale oder sonstige Ausrichtung der Segmente der Mittel 2 denkbar ist. Mit Bezugnahmen auf Figur 2 ist die Aktivierung des oberen streifenförmigen Segmentes 21 der Mittel 2 von besonderem Vorteil, da dies eine an und für sich bekannte Sonnenblende, die herunterklappbar ist, entbehrlich macht.

In den Figuren 3 und 4 sind Blockschaltbilder angegeben, die beispielhaft sind und anhand derer die Ansteuerung der erfindungsgemäßen Mittel erläutert werden. Mit der Bezugsziffer 4 ist ein lichtempfindliches Element (Sensor) bezeichnet, der mit einer Steuereinheit 5 verschaltet ist. Die Steuereinheit 5 übernimmt die Ansteuerung des zumindest einen erfindungsgemäßen Mittels 2, insbesondere in Abhängigkeit des Ausgangssignales des lichtempfindlichen Elementes 4. Dadurch kann eine automatische Steuerung (Aktivierung bzw. Deaktivierung bzw. variable Steuerung) der Mittel 2 erfolgen. Weiterhin ist der Steuereinheit 5 zumindest eine externer Befehlseingabe 6 zugeordnet, bei der es sich einerseits zum Beispiel um einen Geschwindigkeitssensor oder einen Eingang, über den die Steuereinheit 5 ein Geschwindigkeitssignal des Fahrzeuges übermittelt wird, handeln kann. Steht das Fahrzeug, steuert die Steuereinheit 5 die Mittel 2 so an, dass ein maximaler Reflektionsgrad insbesondere sowohl im Infrarotbereich als auch im sichtbaren Bereich erzielt wird, um Wärmeeinstrahlung und Einblick in den Fahrzeuginnenraum zu verhindern. In Abhängigkeit eines Geschwindigkeitssignales, welches eine Bewegung des Fahrzeuges darstellt, kann der Reflektionsgrad zurückgenommen werden um eine Sicht aus dem Innenraum in Richtung nach außen zu gewährleisten. Bei der externen Befehlseingabe 6 kann es sich aber auch um eine manuelle Steuerung handeln, bei der bestimmte Scheiben (wie z.B. Seitenscheiben oder Scheiben im Dach des Fahrzeuges) manuell aktiviert, deaktiviert oder eingestellt werden. Eine solche manuelle Steuerung kann beispielsweise vom Armaturenbrett, dem Lenkrad oder dergleichen des Fahrzeuges erfolgen. Ebenso ist es denkbar, dass die externe Befehlseingabe 6 durch eine Funkzentralverriegelung oder ein schlüsselloses Fahrzeugzugangsberechtigungssystem (wie z.B. Keyless Go) erfolgt.

Figur 4 zeigt noch beispielhaft die Ansteuerung nicht nur eines einzigen Mittels 2, sondern der einzelnen Segmente 21-25, wobei sich eine Vielzahl von Gestaltungsmöglichkeiten zur Ansteuerung und Ausgestaltung der einzelnen Segmente anbietet.

Abschließend sei noch erwähnt, dass nicht nur ein einziges lichtempfindliches Element 4, sondern mehrere lichtempfindliche Elemente vorhanden sein können, anhand derer die Seite des Fahrzeuges ermittelt wird, an der die größte Sonneneinstrahlung erfolgt, um dort insbesondere während der Fahrt des Fahrzeuges individuell die erfindungsgemäße Mittel so ansteuert, dass an der stark von der Sonne beschienen Seite des Fahrzeuges der Reflektionsgrad erhöht wird.

Eine weitere Steigerung der Effektivität ist darin zu sehen, dass insbesondere der Steuereinheit 5 ein fotoelektrisches Element 7 wie z.B. zumindest eine Solarzelle zugeordnet ist. Damit arbeitet dieses System autark, d.h., dass die Sonneneinstrahlung automatisch zur Energieversorgung des gesamten Systems herangezogen werden kann. Für den Fall, dass die eingestrahlte Sonnenenergie nicht ausreichend ist, kann ein zusätzlicher Energiespeicher oder ein Rückgriff auf die fahrzeugeigene Stromversorgung erfolgen.

### Bezugszeichenliste

- 1.: Sichtscheibe
- 2.: Mittel
- 3.: IR-Strahlung
- 4.: Lichtempfindliches Element
- 5.: Steuereinheit
- 6.: Externe Befehlseingabe
- 7.: Photoelektrisches Element
- 21 - 25: streifenförmige Mittel

## Patentansprüche

1. Sichtscheibe (1) für ein Fahrzeug, **dadurch gekennzeichnet, daß** flächig gestaltete Mittel an und/oder in der Sichtscheibe (1) vorhanden sind, mit Hilfe derer die Durchlässigkeit der Sichtscheibe (1) für die elektromagnetischen Wellen im Infrarotbereich und/oder im sichtbaren Bereich variabel steuerbar ist.

2. Sichtscheibe (1) nach Anspruch 1, **dadurch gekennzeichnet, daß** die Mittel aus zumindest einer Folie bestehen.

3. Sichtscheibe (1) nach Anspruch 1, **dadurch gekennzeichnet, daß** die Mittel mindestens zwei Polarisationskörper, vorzugsweise Folien, aufweisen.

4. Sichtscheibe (1) nach Anspruch 1, **dadurch gekennzeichnet, daß** die Mittel einen kristallinen Körper oder einen Aufbau auf dessen Basis darstellen.

5. Sichtscheibe (1) nach Anspruch 1, **dadurch gekennzeichnet, daß** die Mittel mehrschichtige Strukturen aufweisen.

6. Sichtscheibe (1) nach einem der vorhergehenden Ansprüche, **dadurch gekennzeichnet, daß** die Durchlässigkeit durch die Änderungen der Eigenschaften eines elektrischen Feldes steuerbar ist.

7. Sichtscheibe (1) nach einem oder mehreren der vorhergehenden Ansprüche, **dadurch gekennzeichnet, daß** den Mitteln ein stromerzeugendes Element vorgelagert ist.

8. Sichtscheibe (1) nach einem oder mehreren der vorhergehenden Ansprüche, **dadurch gekennzeichnet, daß** die Mittel die ganze Scheibenfläche oder zumindest einen Teil der Scheibenfläche einnehmen.

9. Sichtscheibe (1) nach einem der vorhergehenden Ansprüche, **dadurch gekennzeichnet, daß** die Mittel mit zumindest einem lichtempfindlichen Element elektrisch verbunden sind.

10. Sichtscheibe (1) nach einem oder mehreren der vorhergehenden Ansprüche, **dadurch gekennzeichnet, daß** die Fläche der Mittel in Segmente aufgeteilt ist, oder zumindest zwei solche Elemente die Scheibenfläche oder deren Teil einnehmen.

11. Sichtscheibe (1) nach einem oder mehreren der vorhergehenden Ansprüche, **dadurch gekennzeichnet, daß** die Mittel oder Segmente eines Mittels als Streifen ausgeführt sind.

12. Sichtscheibe (1) nach einem oder mehreren der vorhergehenden Ansprüche, **dadurch gekennzeichnet, daß** die Ansteuerung des zumindest einen Mittels durch eine externe Befehlseingabe (6) erfolgt.
